# EUROPEAN PATENT APPLICATION

(11) **EP 1 528 563 A1**
(43) Date of publication of application: **04.05.2005**
(21) Application number: 03741255.8
(22) Date of filing: 07.07.2003
(51) Int. Cl.: G11B 23/00, G11B 7/24

(54) **OPTICAL DISK MEDIUM AND HUB**

(30) Priority: 06.08.2002 JP 2002228859
(71) Applicant: MATSUSHITA ELECTRIC INDUSTRIAL CO., LTD., Kadoma-shi, Osaka 571-8501 (JP)
(72) Inventor: MIZUNO, Osamu, Osaka-shi, Osaka 546-0033 (JP); NAKAMURA, Tohru, Katano-shi, Osaka 576-0022 (JP); NISHIKIORI, Keiji, Yawata-shi, Kyoto 614-8280 (JP)
(74) Representative: Schorr, Frank, Dr.
(86) International application number: PCT/JP2003/008632
(87) International publication number: WO 2004/013856

(57) **Abstract**

An optical disk medium (20), comprising an optical disk medium body (1) having a first layer (2), a second layer (2b) thinner than the first layer (2), a recording layer (2a) between the first layer (2) and the second layer (2b) and a center hole (3) at the center thereof and a hub (10) formed of a magnetic substance material, wherein the hub (10) is fixed to the optical disk medium body (1) so as to close the center hole (3) in the movable state relative to the optical disk medium body (1) within a specified range, the surface of the optical disk medium body (1) on the second layer (2b) side forms a light input surface, and a projection is not substantially formed on the surface of the optical disk medium body (1) on the light input surface side including the peripheral edge of the center hole (3), whereby since the second layer (2b) can be thinly and accurately formed, the optical disk medium suitable for high-density recording can be provided at a low cost.

## Description

### TECHNICAL FIELD

The present invention relates to an optical disk medium in which light, in particular a laser beam, contributes to a recording/reproducing procedure and relates to a hub, made of a magnetic material, that is for mounting an optical disk medium on an optical disk drive by utilizing a magnetic attractive force.

### BACKGROUND ART

Examples of conventional optical disk media with hubs attached thereto include a minidisc (hereinafter abbreviated as MD) and an optical disk medium with a hub that is used in a 3.5-inch or a 5-inch group magneto-optical data file device, for example.

JP 3072658 B shows one example of the optical disk medium and the hub for MD.

The magneto-optical recording with respect to MDs or the like is a kind of vertical thermo-magnetic recording. That is, with respect to a medium whose coercive force has been reduced partially by application of heat with a laser beam, the recording is conducted by applying a vertical magnetic field modulated with a recording signal so as to magnetize the medium and form vertical magnetic domains. This modulated vertical magnetic field is generated by a magnetic head. The reproduction is conducted by detecting the rotation of a reflecting-polarized plane due to the Kerr effect so as to read a magnetizing direction of the vertical magnetic domains.

Although MDs mainly are targeted for recording music data, optical disk media generally are required to have capabilities of further recording and storing massive amounts of data, including data and images. To this end, the optical disk media are required to have a larger capacity, which means that higher-density optical disk media are demanded strongly.

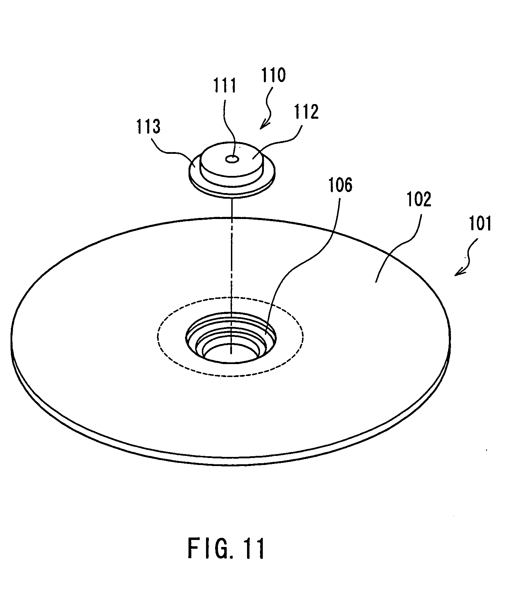

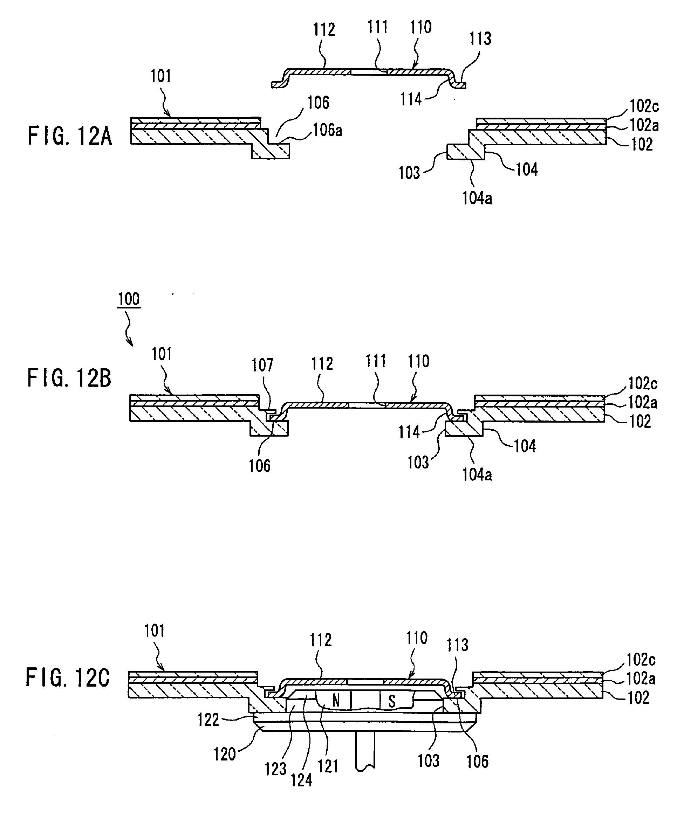

The following are explanations of a conventional optical disk medium and hub, taking those described in the above-mentioned JP 3072658 B as an example. Fig. 11 is an exploded perspective view showing their overall configuration. Fig. 12A is a cross-sectional view showing one step for attaching the hub to an optical disk medium body. Fig. 12B is a cross-sectional view of the conventional optical disk medium with the hub attached thereto. Fig. 12C is a cross-sectional view showing a state where the conventional optical disk medium is mounted on a turntable of a driving device. For convenience of explanations, the longitudinal direction of the sheet will be referred to as a "height direction".

In Fig. 11, Fig. 12A and Fig. 12B, reference numeral 101 denotes an optical disk medium body, and a MD is exemplified herein for the explanation. The optical disk medium body 101 mainly is made up of a substrate 102 in a substantially disk form, and on one surface of the substrate 102 a recording layer 102a is provided. Reference numeral 102c denotes a protective layer provided on a surface of the recording layer 102a in order to protect the recording layer 102a from oxidization and the like. In the recording layer 102a, a signal portion region is formed in which information is recorded. A laser beam that allows information to be recorded, reproduced and erased is applied to the recording layer 102a from a side of the substrate 102 by way of the substrate 102. That is, a light-incident surface is a lower surface of the substrate 102 in Fig. 12B.

Therefore, the substrate 102 functions as a cover layer of the recording layer 102a when being irradiated with a laser beam.

As shown in Fig. 12A and Fig. 12B, a center hole 103 for centering is provided at the center of the substrate 102. On a surface of the substrate 102 on the side where the recording layer 102a is provided, a concave portion 106 is formed at an edge along the center hole 103 so as to be recessed from the region where the recording layer 102a is provided. Furthermore, on a surface (light-incident surface) of the substrate 102 that is opposite to the side where the recording layer 102a is provided, a convex portion 104 is formed at an edge along the center hole 103 so as to protrude from a region outside the convex portion.

Reference numeral 110 denotes the hub, made of a magnetic material, having a disk form like a substantially hat shape and a hub hole 111 is bored at the center of the hub to allow the handling with a jig or the like. Reference numeral 112 denotes an attracted plane in a planar disk form that occupies most of the hub 110, and 113 denotes a flange that is displaced from the attracted plane 112 in the height direction. A wall 114 connects between the attracted plane 112 and the flange 113.

From the state shown in Fig. 12A, the flange 113 of the hub 110 is inserted into the concave portion 106 of the substrate 102, so as to bring a lower surface of the flange 113 into contact with a bottom surface 106a of the concave portion 106. Thereafter, heat and pressure are applied to the edge of the concave portion 106 so as to thermally deform the same, whereby, as shown in Fig. 12B, a protrusion 107 is formed to cover an upper surface of the flange 113. As a result, the flange 113 is fixed in the concave portion 106, whereby an optical disk medium 100 can be obtained.

Referring to Fig. 12C, a procedure for mounting the optical disk medium 100 with the hub 110 of Fig. 12B on the turntable will be explained below, where the turntable is attached to a rotary shaft of a spindle motor of the driving device (not illustrated). In Fig. 12C, reference numeral 120 denotes the turntable, at the center of which a convex portion 123 protrudes to include a permanent magnet 121 embedded therein. During the insertion of the convex portion 123 of the turntable 120 into the center hole 103 of the substrate 102, a tapered portion 124 at the top of the convex portion 123 enables the correction of the displacement of the center of the optical disk medium body 101 from the rotation center of the turntable 120. Then, a magnetic attractive force by the permanent magnet 121 acts on the attracted plane 112 of the hub 110 so that the edge of the substrate 102 along the center hole 103 is positioned between the flange 113 of the hub 110 and the turntable 120, whereby the optical disk medium body 101 is held on the turntable 120. In this step, a lower surface 104a of the convex portion 104 of the substrate 102 makes contact with an upper surface of a flange 122 that is formed at the edge of the turntable 120. Thereby, the optical disk medium body 101 is positioned in the direction of the rotary shaft (the height direction). Furthermore, an inner wall surface of the center hole 103 of the substrate 102 makes contact with a cylindrical outer wall surface of the convex portion 123 protruding from the center of the turntable 120, whereby the optical disk medium body 101 is aligned in the radius direction.

In this state, a collected light beam is applied from the side of the substrate 102. The laser beam passes through the substrate 102 and is converged on the recording layer 102a. The reproduction of information is enabled by detecting reflected light that has been modulated in accordance with the information recorded on the recording layer 102a and demodulating the same. In the magneto-optical recording technique adopted for MDs or the like, the recording and the erasing of information are enabled by irradiating the recording layer 102a with an intense laser beam from one side of the optical disk medium 101 so as to heat the recording layer 102a while applying a modulated magnetic field from the other side.

The above-described conventional optical disk medium 100, however, has the following problems.

That is, the convex portion 104 protruding toward the light-incident surface side becomes a hindrance to a higher density optical disk medium. This will be described below in detail.

As previously described, optical disk media are required to have a large capacity so as to allow for the recording of image data and the like, which results in a demand for higher-density optical disk media. One of the effective means for realizing a higher density is to make an optical spot formed in the recording layer minute so as to enhance a spatial resolution. A size of this optical spot is proportional to λ / (2 × NA), where λ represents a wavelength of a laser beam and NA represents a numerical aperture of an objective lens. Therefore, in order to obtain a higher density, it is effective to decrease λ and increase NA.

In the normal heat mode recording that does not utilize super-resolution, a width of a recording track and a bit length in a linear direction both can be made minute proportional to λ / (2 × NA), whereby the recording density can be increased proportional to the square of the inverse of λ / (2 × NA).

When λ decreases and NA increases, however, the tolerance of a region through which a laser beam passes, i.e., the cover layer (substrate 102), to the occurrence of various aberrations decreases rapidly. For instance, when NA is increased, the tolerance of a tilt of the cover layer with reference to the laser optical axis decreases proportionally to the cube of the inverse of the NA. In addition, the tolerance of the tilt of the cover layer with reference to the laser optical axis is proportional to λ.

For instance, when a system with NA =0.6 and λ = 700 nm is substituted for a system with NA =0.9 and λ = 400 nm, although the recording density is increased by about seven times, the tolerance of the tilt of the cover layer should be controlled to about 1/6 of that prior to the change.

In addition to that, when NA is increased, the tolerance of a thickness of the cover layer (substrate 102) decreases proportionally to the fourth power of the inverse of the NA.

On the other hand, the tolerance to the tilt increases proportionally to the inverse of the thickness of the cover layer. In other words, the tolerance to the tilt increases with decreasing the thickness of the cover layer. For instance, in the above-stated numerical example, in order to make the tolerance to the tilt after the change of the conditions for λ and NA substantially equal to that prior to the change, the thickness of the cover layer should be 1/6 of that prior to the change. However, a range of the tolerance to the cover layer thickness is not enlarged.

From these points, in order to realize a higher density optical disk medium, an optical disk medium with a thin cover layer has been proposed, and technology for making the cover layer thin and uniform in thickness receives attention.

The thickness of the cover layer according to this technology is considerably thin, about 100 µm, and its error in thickness should be controlled to about several µm. In the above-described conventional example shown in Fig. 11 and Figs. 12A to 12C, however, the convex portion 104 is present on the light-incident surface side of the cover layer (substrate 102), which becomes a significant hindrance to the formation of a cover layer that is thin and uniform in thickness, so that sufficient optical properties cannot obtained. This brings about the problem in that a higher density optical disk medium cannot be realized.

### DISCLOSURE OF THE INVENTION

In order to cope with the above-stated problems, it is an object of the present invention to provide an optical disk medium and a hub that enable a higher density optical disk medium.

An optical disk medium of the present invention includes: an optical disk medium body including a first layer, a second layer thinner than the first layer, and a recording layer between the first layer and the second layer and including a center hole at a center thereof; and a hub made of a magnetic material. The hub is confined with the optical disk medium body in such a manner that the hub is movable with respect to the optical disk medium body within a predetermined range and that the hub covers the center hole. A surface of the optical disk medium body on a side of the second layer is a light-incident surface, and there is substantially no protrusion formed on the surface of the optical disk medium body on the light-incident surface side that includes an edge along the center hole.

A hub of the present invention is attached to an optical disk medium body so as to cover a center hole formed at a center of the optical disk medium body and is for mounting the optical disk medium body on a turntable by utilizing a magnetic attractive force. The hub is made of a magnetic material and includes: an attracted plane on which the magnetic attractive force acts; and a plurality of first latching strips and a plurality of second latching strips, the first latching strips and the second latching strips being located at positions different from each other in a direction of the normal of the attracted plane.

### BRIEF DESCRIPTION OF DRAWINGS

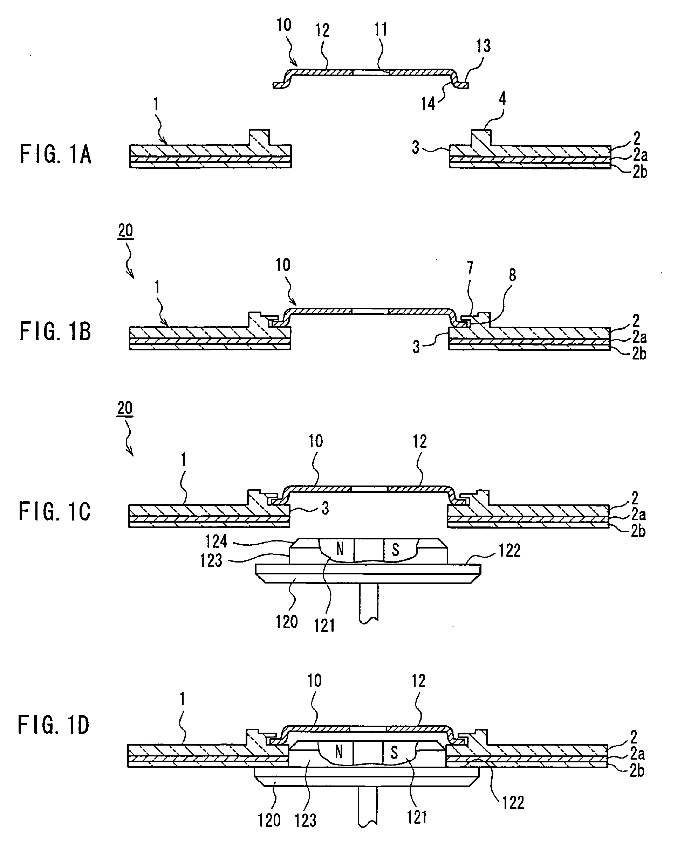

Fig. 1A is a cross-sectional view of an optical disk medium body and a hub of Embodiment 1 of the present invention, which shows a state before the attachment of the hub, Fig. 1B is a cross-sectional view of an optical disk medium according to Embodiment 1 of the present invention, which shows a state where the hub has been attached, Fig. 1C is a cross-sectional view showing a state immediately before the optical disk medium according to Embodiment 1 of the present invention is mounted on a turntable of a driving device, and Fig. 1D is a cross-sectional view showing a state where the optical disk medium according to Embodiment 1 of the present invention has been mounted to the turntable of the driving device.
Fig. 2A is a cross-sectional view of an optical disk medium body and a hub of Embodiment 2 of the present invention, which shows a state before the attachment of the hub, and Fig. 2B is a cross-sectional view of an optical disk medium according to Embodiment 2 of the present invention, which shows a state where the hub has been attached.
Fig. 3A is a plan view of an optical disk medium body of Embodiment 3 of the present invention, and Fig. 3B is a cross-sectional view taken along an arrow 3B-3B of Fig. 3A.
Fig. 4A is a plan view of a hub of Embodiment 3 of the present invention, Fig. 4B is a cross-sectional view taken along an arrow 4B-4B of Fig. 4A and Fig. 4C is a cross-sectional view taken along an arrow 4C-4C of Fig. 4A.
Fig. 5A is a cross-sectional view of an optical disk medium body and a hub of Embodiment 3 of the present invention, which shows a state before the attachment of the hub, and Fig. 5B is a cross-sectional view of an optical disk medium according to Embodiment 3 of the present invention, which shows a state where the hub has been attached.
Fig. 6A is a plan view of a hub of Embodiment 4 of the present invention, and Fig. 6B is a cross-sectional view taken along an arrow 6B-6B of Fig. 6A.
Fig. 7A is a cross-sectional view of an optical disk medium body and a hub of Embodiment 4 of the present invention, which shows a state before the attachment of the hub, and Fig. 7B is a cross-sectional view of an optical disk medium according to Embodiment 4 of the present invention, which shows a state where the hub has been attached.
Fig. 8 is a plan view of an optical disk medium body of Embodiment 5 of the present invention.
Fig. 9 is a plan view of a hub of Embodiment 5 of the present invention.
Fig. 10 is an expanded cross-sectional view of a portion in the vicinity of a center hole of an optical disk medium of Embodiment 6 of the present invention.
Fig. 11 is an exploded perspective view showing the conventional optical disk medium and the hub.
Fig. 12A is a cross-sectional view of the conventional optical disk medium body and hub, which shows a state before the attachment of the hub, Fig. 12B is a cross-sectional view of the conventional optical disk medium, which shows a state where the hub has been attached, and Fig. 12C is a cross-sectional view showing a state where the conventional optical disk medium has been mounted on the turntable of the driving device.

### BEST MODE FOR CARRYING OUT THE INVENTION

The optical disk medium of the present invention includes: an optical disk medium body including a first layer, a second layer thinner than the first layer, and a recording layer between the first layer and the second layer and including a center hole at a center thereof; and a hub made of a magnetic material. The hub is confined with the optical disk medium body in such a manner that the hub is movable with respect to the optical disk medium body within a predetermined range and that the hub covers the center hole. A surface of the optical disk medium body on a side of the second layer is a light-incident surface, and there is substantially no protrusion formed on the surface of the optical disk medium body on the light-incident surface side that includes an edge along the center hole.

According to such an optical disk medium of the present invention, the second layer can be formed thinner and precisely, and therefore an optical disk medium suitable for high-density recording can be provided at a low cost.

In the above optical disk medium of the present invention, it is preferable that a surface for fitting to a turntable of a driving device is the light-incident surface. With this configuration, the distance between the recording layer and an optical head that emits a laser beam can be stabilized, so that the signal quality can be enhanced. As a result, an optical disk medium suitable for high-density recording can be provided.

In the above optical disk medium of the present invention, it is preferable that a confinement portion for confining the hub is provided in the first layer. The confinement portion is provided in the first layer located on the opposite side of the light-incident surface, which facilitates the formation of a thin second layer with a uniform thickness on the light-incident surface side and the enhancement of the flatness of the surface on the light-incident surface side. As a result, an optical disk medium suitable for high-density recording can be provided.

In the above, the confinement portion may be provided outside a range of a thickness of the first layer. This allows the hub to be attached easily even to a thin substrate.

Alternatively, the confinement portion may be provided within a range of a thickness of the first layer. This allows a part or all of the thickness of the hub to be included in the thickness of the substrate, whereby a low-profile optical disk medium with fewer protrusions can be provided. Furthermore, the confinement portion can be formed relatively easily, and the flatness of the optical disk medium body can be enhanced.

In the above optical disk medium of the present invention, preferably, the hub includes an attracted plane on which a magnetic attractive force acts and a flange formed substantially parallel to the attracted plane and along an edge of the attracted plane. At the flange, the hub is confined with the optical disk medium body, and a substantially ring-shaped contacting region at which the flange and the optical disk medium body contact has an inner diameter of 11.8 mm or more and an outer diameter of 13.3 mm or less. With this configuration, when the optical disk medium is mounted on a turntable of a driving device, the warp of the optical disk medium body can be reduced.

In the above optical disk medium of the present invention, preferably, the hub includes an attracted plane on which a magnetic attractive force acts and a flange formed substantially parallel to the attracted plane and along an edge of the attracted plane. At the flange, the hub is confined with the optical disk medium body, and a region of the optical disk medium body that contacts with the flange has a thickness of 0.5 mm or more. With this configuration, when the optical disk medium is mounted on a turntable of a driving device, the warp of the optical disk medium body can be reduced.

Meanwhile, the hub of the present invention is attached to an optical disk medium body so as to cover a center hole formed at a center of the optical disk medium body and is for mounting the optical disk medium body on a turntable by utilizing a magnetic attractive force. The hub is made of a magnetic material and includes: an attracted plane on which the magnetic attractive force acts; and a plurality of first latching strips and a plurality of second latching strips, the first latching strips and the second latching strips being located at positions different from each other in a direction of the normal of the attracted plane.

According to such a hub of the present invention, the hub can be connected with the optical disk medium body easily without the necessity of specific melting and deforming procedures. Therefore, there is no need to provide a protrusion for attaching a hub on a surface of the optical disk medium body on the light-incident surface side including an edge along the center hole. As a result, an optical disk medium suitable for high-density recording can be provided at a low cost.

Preferably, the above hub of the present invention is attached to the optical disk medium body in such a manner that at least a part of the optical disk medium body at an edge along the center hole is positioned between the plurality of first latching strips and the plurality of second latching strips. This can simplify the attachment structure of the hub to the optical disk medium body.

The above hub of the present invention preferably is attached to the optical disk medium body in such a manner that the hub is movable with respect to the optical disk medium body within a predetermined range. This configuration can avoid the warp of the optical disk medium body and the occurrence of internal stress, which result from differences in dimensional change and deformation between the hub and the optical disk medium body caused by a change in temperature and humidity. Furthermore, when the optical disk medium is mounted on the turntable of the driving device, the centering of the optical disk medium body can be conducted easily with respect to the turntable.

In the above hub of the present invention, preferably, the plurality of first latching strips are formed rigidly with the attracted plane, and the plurality of second latching strips can be displaced elastically with respect to the attracted plane. Since the first latching strips have high stiffness, when the optical disk medium is mounted on the turntable of the driving device, the hub can be positioned with respect to the turntable in the height direction precisely. Thereby, a stable attractive force can be attained. Furthermore, since the second latching strips can be displaced elastically, the hub can be attached to the optical disk medium body easily without the necessity of specific manufacturing equipment, and therefore an optical disk medium can be realized at a low cost.

Preferably, when the above hub of the present invention is attached to the optical disk medium body, the plurality of second latching strips make contact with an edge along the center hole so as to be displaced elastically with respect to the attracted plane and thereafter are restored elastically, thereby the hub is attached to the optical disk medium body in such a manner that at least a part of the edge along the center hole is positioned between the plurality of first latching strips and the plurality of second latching strips. With this configuration, the hub can be attached to the optical disk medium body easily without the necessity of specific manufacturing equipment, and therefore an optical disk medium can be realized at a low cost.

Preferably, the above hub of the present invention further includes a plurality of leg portions that extend in a direction substantially perpendicular to the attracted plane. The plurality of second latching strips respectively are provided at tip ends of the plurality of leg portions and protrude outwardly substantially parallel to the attracted plane, and the plurality of first latching strips protrude outwardly substantially parallel to the attracted plane. With this configuration, second latching strips that can be displaced elastically can be formed easily.

Herein, it is preferable that a diameter of a circle that is inscribed in the plurality of leg portions is larger than a diameter of a circle that is inscribed in the center hole. With this configuration, the leg portions do not adversely affect the centering operation of the optical disk medium body with respect to the turntable of the driving device. Therefore, when the optical disk medium is mounted on the turntable of the driving device, a stable centering operation can be realized.

Preferably, the above hub of the present invention further includes a plurality of walls that extend substantially perpendicular to the attracted plane. The plurality of first latching strips respectively are provided at tip ends of the plurality of walls and protrude outwardly in substantially parallel with the attracted plane, and the hub has a substantially hat shaped disk form as a whole. With this configuration, first latching strips having high stiffness can be formed easily. Furthermore, the strength of the hub can be enhanced.

In the above hub of the present invention, the plurality of first latching strips and the attracted plane may be substantially coplanar with each other. With this configuration, a relative positional accuracy between the first latching strips and the attracted plane can be enhanced in the direction of the normal of the attracted plane. Therefore, when the optical disk medium is mounted on the turntable of the driving device, the positional accuracy of the attracted plane on which the magnetic attractive force acts with respect to the turntable can be improved significantly. Thus, a hub enabling the generation of a stable attractive force can be provided.

A second optical disk medium of the present invention includes: an optical disk medium body including a first layer, a second layer thinner than the first layer, and a recording layer between the first layer and the second layer and including a center hole at a center thereof; and a hub attached so as to cover the center hole. A surface of the optical disk medium body on a side of the second layer is a light-incident surface, and the hub is the above hub of the present invention.

According to such a second optical disk medium of the present invention, the hub can be connected with the optical disk medium body easily without the necessity of specific melting and deforming procedures. Therefore, there is no need to provide a protrusion for attaching a hub on a surface of the optical disk medium body on the light-incident surface side including an edge along the center hole. As a result, an optical disk medium suitable for high-density recording can be provided at a low cost.

Preferably, in a state where the above second optical disk medium of the present invention is mounted on a turntable of a driving device, the second latching strips, which are the nearest to the turntable, do not protrude from the surface of the optical disk medium body on a side of the light-incident surface, and the surface of the optical disk medium body on the side of the light-incident surface contacts with a surface of the turntable. With this configuration, when the optical disk medium is mounted on the turntable of the driving device, the second latching strips do not affect the attitude of the optical disk medium body and the surface on the light-incident side and the surface of the turntable can establish surface contact therebetween, and therefore the optical disk medium can be mounted on the turntable stably. Furthermore, the distance between the recording layer and an optical head that emits a laser beam can be stabilized, so that a signal quality can be enhanced. As a result, an optical disk medium suitable for high-density recording can be provided.

In the above second optical disk medium of the present invention, it is preferable that the hub is confined with the optical disk medium body in such a manner that the hub is movable with respect to the optical disk medium body within a predetermined range. This configuration can avoid the warp of the optical disk medium body and the occurrence of internal stress, which result from differences in dimensional change and deformation between the hub and the optical disk medium body caused by a change in temperature and humidity. Furthermore, when the optical disk medium is mounted on the turntable of the driving device, the centering of the optical disk medium body can be conducted easily with respect to the turntable.

In the above second optical disk medium of the present invention, preferably, the hub further includes a plurality of leg portions that extend in a direction substantially perpendicular to the attracted plane. The plurality of second latching strips respectively are provided at tip ends of the plurality of leg portions and protrude outwardly in substantially parallel with the attracted plane. A plurality of cut-away portions are formed at a part of an edge along the center hole, the cut-away portions extending outwardly, and a diameter of a circle that is inscribed in edges of the plurality of cut-away portions is larger than a diameter of a circle that is circumscribed around the plurality of leg portions. With this configuration, the hub can be kept in a movable state with respect to the optical disk medium body in a direction along a plane in parallel with the light-incident surface.

In the above second optical disk medium of the present invention, preferably, a concave portion in which each of the plurality of second latching strips is to be fitted is formed at an edge of each of the plurality of cut-away portions on the light-incident surface side, and assuming that a depth of the concave portion in a direction of the normal of the light-incident surface is *H* and a thickness of the plurality of second latching strips in the direction of the normal is *h*, a relationship of *H*> *h* is satisfied. With this configuration, when the optical disk medium is mounted on the turntable of the driving device, the second latching strips retract in the concave portions and do not protrude from the surface on the light-incident side. Therefore, the surface on the light-incident side and the surface of the turntable can establish surface contact therebetween, so that the optical disk medium can be mounted on the turntable stably. Furthermore, the distance between the recording layer and an optical head that emits a laser beam can be stabilized, so that a signal quality can be enhanced. As a result, an optical disk medium suitable for high-density recording can be provided.

In the above second optical disk medium of the present invention, preferably, there is substantially no protrusion formed on the surface on the light-incident surface side that includes an edge along the center hole. With this configuration, the second layer can be formed thinner and precisely, and therefore an optical disk medium suitable for high-density recording can be provided at a low cost.

In the above second optical disk medium of the present invention, preferably, a diameter of a circle that is inscribed in a plurality of regions where the plurality of first latching strips and the optical disk medium body contact is 11.8 mm or more, and a diameter of a circle that is circumscribed around the plurality of regions is 13.3 mm or less. With this configuration, when the optical disk medium is mounted on a turntable of a driving device, the warp of the optical disk medium body can be reduced.

In the above second optical disk medium of the present invention, preferably, a thickness of the optical disk medium body at a region where the optical disk medium body contacts with the first latching strips is 0.5 mm or more. With this configuration, when the optical disk medium is mounted on a turntable of a driving device, the warp of the optical disk medium body can be reduced.

The following describes specific embodiments of the present invention in detail, with reference to Fig. 1 to Fig. 10. In the drawings, a cross-section of a disk is shown by way of a cut end face only for the sake of intelligibility. Note here that the present invention is not limited to the following embodiments.

In the following descriptions, a direction normal to a light-incident surface of the optical disk medium (direction of a rotation center axis) will be referred to as a "height direction".

### (Embodiment 1)

Fig. 1A is an exploded cross-sectional view of an optical disk medium body and a hub that constitute an optical disk medium of Embodiment 1 of the present invention, and Fig. 1B is a cross-sectional view of the optical disk medium of Embodiment 1 of the present invention.

In Fig. 1A and Fig. 1B, reference numeral 1 denotes the optical disk medium body, 2 denotes a substantially disk-shaped substrate (a first layer), 2a denotes a recording layer provided on one side of the substrate 2, and 2b denotes a cover layer (a second layer) provided on a surface of the recording layer 2a. The cover layer 2b has a thickness smaller than that of the substrate 2, and is formed favorably for high-density recording. The recording layer 2a sandwiched between the substrate 2 and the cover layer 2b may be a phase change type, a magneto-optical recording type or other types of recording layers. In the recording layer 2a, a signal portion region is formed in which information is recorded. A laser beam (not illustrated) enabling the recording, the reproduction and the erasing of information is incident from a side of the cover layer 2b. That is, a light-incident surface is a surface of the cover layer 2b in Fig. 1B. Reference numeral 3 denotes a center hole for centering that is provided at the center of the substrate 2. As shown in Fig. 1A, a ring-shaped convex portion 4 is provided on a surface of the substrate 2 that is opposite to the light-incident surface and in the vicinity of the center hole 3.

Surfaces of the substrate 2, the recording layer 2a and the cover layer 2b that constitute the optical disk medium body 1 are substantially flat on the respective light-incident surface sides from the center hole 3 to the outermost periphery.

Similarly to the conventional example, reference numeral 10 denotes a hub, made of a magnetic material, having a disk form in a substantially hat shape, and a hub hole 11 is bored at the center of the hub to allow handling with a jig or the like. Reference numeral 12 denotes an attracted plane in a planar disk form that occupies most of the hub 10, 14 denotes a wall extending in a direction substantially perpendicular to the attracted plane 12, and 13 denotes a flange that is substantially perpendicular to the wall 14 and extends outwardly substantially in parallel with the attracted plane 12. The outer diameter of the flange 13 is smaller than the inner diameter of the convex portion 4.

From the state shown in Fig. 1A, the flange 13 of the hub 10 is inserted inside the convex portion 4 so as to bring a lower surface of the flange 13 into contact with an upper surface of the substrate 2. In this step, since the outer diameter of the flange 13 is smaller than the inner diameter of the convex portion 4, the hub 10 is movable horizontally with respect to the substrate 2 within a range of a difference between the inner diameter and the outer diameter.

Thereafter, heat and pressure, for example, are applied to an inner portion of the ring-shaped convex portion 4 so as to thermally deform the same, whereby, as shown in Fig. 1B, a protrusion 7 is formed so as to protrude in a horizontal direction and cover an upper surface of the flange 13. As a result, the flange 13 is confined with the substrate 2 by means of a confinement portion 8 that is formed in a substantially "⊃" shape in cross section. Herein, the protrusion 7 is formed so that its lower surface does not contact with the flange 13. Thereby, the hub 10 is confined with the substrate 2 while keeping a state where the movability of the hub is ensured with respect to the substrate 2 in the horizontal direction and in the height direction.

Referring to Fig. 1C and Fig. 1D, a procedure for mounting the thus configured optical disk medium 20 on a turntable will be explained below, where the turntable is attached to a rotary shaft of a spindle motor of the driving device (not illustrated). In Fig. 1C, reference numeral 120 denotes the turntable, at the center of which a convex portion 123 having a cylindrical surface protrudes so as to include a permanent magnet 121 embedded therein. The convex portion 123 of the turntable 120 is inserted into the center hole 3 from the side of the cover layer 2b of the optical disk medium body 1. In this step, a tapered portion 124 at the top of the convex portion 123 enables the correction (centering) of the displacement of the center of the optical disk medium body 1 from the rotation center of the turntable 120. Then, as shown in Fig. 1D, a magnetic attractive force by the permanent magnet 121 acts on the attracted plane 12 of the hub 10 so that the edge of the optical disk medium body 1 along the center hole 3 is positioned between the flange 13 of the hub 10 and the turntable 120, whereby the optical disk medium body 1 is held onto the turntable 120. In this step, a lower surface of the cover layer 2b makes contact with an upper surface of a flange 122 that is formed at the edge of the turntable 120. Thereby, the optical disk medium body 1 is positioned in a direction of the rotary shaft (the height direction). Furthermore, an inner wall surface of the center hole 3 of the optical disk medium body 1 makes contact with an outer wall surface of the convex portion 123 protruding from the center of the turntable 120, whereby the optical disk medium body 1 is positioned in the radius direction.

In the present embodiment, unlike the conventional example shown in Fig. 12C, the optical disk medium is mounted on the turntable 120 from the side opposite to the substrate 2.

In this state, a collected light beam is applied from the side of the cover layer 2b. The laser beam passes through the cover layer 2b and is converged on the recording layer 2a. The reproduction of information is enabled by detecting reflected light that has been modulated in accordance with the information recorded on the recording layer 2a and demodulating the same.

In the case of a phase-change type recording layer 2a and the like, the recording and the erasing of information are enabled by applying heat to the recording layer 2a by irradiation with an intense laser beam. In the case of a magneto-optical recording type recording layer 2a, the recording and the erasing are enabled by the concurrent use of an external magnetic field.

When the optical disk medium 20 undergoes a change in temperature and humidity, the substrate 2 and the hub 10 have different forms and amounts of deformation due to the change in temperature and moisture absorption. However, since the hub 10 is confined while keeping a movable state with respect to the substrate 2 as described above, the warp of the optical disk medium body 1 and the occurrence of internal stress can be avoided by setting a difference between the inner diameter of the convex portion 4 and the outer diameter of the flange 13 at a value with consideration given to the differences in the forms and the amounts of the deformation.

In the present embodiment, the surface of the cover layer 2b that is provided on the light-incident surface side of the optical disk medium body 1 is flat, and does not have a protrusion like the convex portion 104 that is provided on the substrate 102 that doubles as the cover layer as in the conventional example shown in Fig. 12B. Therefore, the cover layer 2b can be formed thin and uniform in thickness easily. Hence, the cover layer 2b with a reduced optical aberration and excellent optical properties can be formed easily. Therefore, the resolution can be enhanced, thus enabling high density recording.

In the conventional example shown in Fig. 12B, the lower surface 104a of the convex portion 104 makes contact with the upper surface of the flange 122 of the turntable 120. In general, it is difficult to control strictly the height of the convex portion 104 that protrudes like a ring shape from a plane. Therefore, when the optical disk medium 100 is mounted on the turntable 120, a variation in height of the convex portion 104 causes a variation in distance between the upper surface of the flange 122 and the recording layer 102a, which causes a variation in distance between the objective lens of the optical head and the recording layer 102a. This results in a problem of a failure in the convergence of a laser beam on the recording layer 102a, thus degrading the accuracy of recording/reproduction of information. On the other hand, according to the present embodiment, the cover layer 2b itself makes contact with the upper surface of the flange 122 of the turntable 120, where the entire surface of the cover layer 2b is flat. Since the control of the thickness of the cover layer 2b is easier than the control of the height of the convex portion 104, the variation in distance between the upper surface of the flange 122 and the recording layer 2a can be decreased, which results in the enhancement of the accuracy of recording/reproduction of information.

Note here that, as a method of fixing the hub 10 to the substrate 2, in Fig. 1B, the inner portion only of the ring-shaped convex portion 4 is deformed so as to form the protrusion 7 to confine the hub 10. However, the present invention is not limited to this and the convex portion 4 may be deformed as a whole, for example.

### (Embodiment 2)

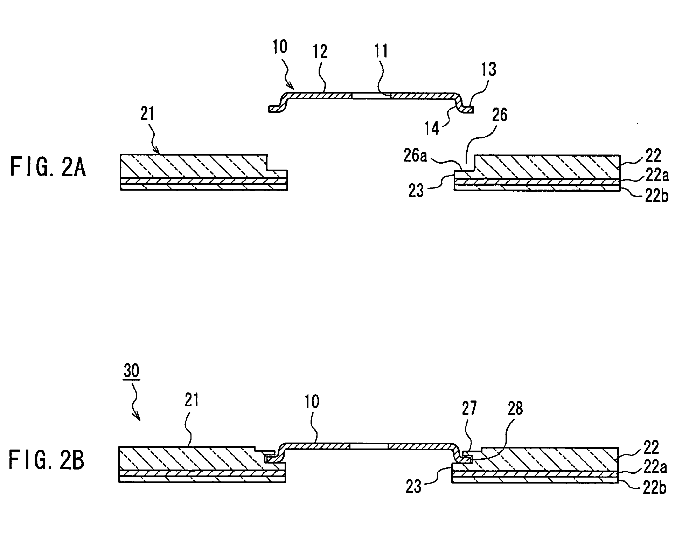

Fig. 2A is an exploded cross-sectional view of an optical disk medium body and a hub that constitute an optical disk medium of Embodiment 2 of the present invention, and Fig. 2B is a cross-sectional view of the optical disk medium of Embodiment 2 of the present invention. The following is a description of Embodiment 2 that mainly concerns the differences from Embodiment 1.

In Fig. 2A and Fig. 2B, reference numeral 21 denotes an optical disk medium body, 22 denotes a substantially disk-shaped substrate (a first layer), 22a denotes a recording layer provided on one side of the substrate 22, and 22b denotes a cover layer (a second layer) provided on a surface of the recording layer 22a. The cover layer 22b has a thickness smaller than that of the substrate 22 and is formed favorably for high-density recording. The recording layer 22a sandwiched between the substrate 22 and the cover layer 22b may be a phase change type, a magneto-optical recording type or other types of recording layers. In the recording layer 22a, a signal portion region is formed in which information is recorded. A laser beam (not illustrated) enabling the recording, the reproduction and the erasing of information is incident from a side of the cover layer 22b. That is, a light-incident surface is a surface of the cover layer 22b in Fig. 2B. Reference numeral 23 denotes a center hole for centering that is provided at the center of the substrate 22.

In the present embodiment, a thickness of the substrate 22 except an edge along the center hole 23 is thicker than the thickness of the substrate 2 of Embodiment 1. In addition, a ring-shaped concave portion 26 is provided on the surface of the substrate 22 that is opposite to the light-incident surface side and at the edge along the center hole 23. In the present embodiment, the convex portion 4 shown in Fig. 1A is not provided.

Surfaces of the substrate 22, the recording layer 22a and the cover layer 22b that constitute the optical disk medium body 21 are substantially flat on the respective light-incident surface sides from the center hole 23 to the outermost periphery.

Reference numeral 10 denotes a hub, which is the same as the hub 10 described in Embodiment 1. The hub 10 has an attracted plane 12, a flange 13 and a wall 14, and a hub hole 11 is bored at the center of the attracted plane 12. The outer diameter of the flange 13 is smaller than the inner diameter of the concave portion 26.

From the state shown in Fig. 2A, the flange 13 of the hub 10 is inserted inside the concave portion 26 so as to bring a lower surface of the flange 13 into contact with a bottom surface 26a of the concave portion 26. In this step, since the outer diameter of the flange 13 is smaller than the inner diameter of the concave portion 26, the hub 10 is movable horizontally with respect to the substrate 22 within a range of the difference between the inner diameter and the outer diameter.

Thereafter, heat and pressure, for example, are applied to the edge of the ring-shaped concave portion 26 so as to thermally deform the same, whereby, as shown in Fig. 2B, a protrusion 27 is formed so as to protrude in a horizontal direction and cover an upper surface of the flange 13. As a result, the flange 13 is confined with the substrate 22 by means of a confinement portion 28 that is formed in a substantially "⊃" shape in cross section. Herein, the protrusion 27 is formed so that its lower surface does not contact with the flange 13. Thereby, the hub 10 is confined with the substrate 22 while keeping the movability of the hub 10 with respect to the substrate 22 in the horizontal direction and in the height direction.

A procedure for mounting the thus configured optical disk medium 30 on a turntable that is attached to a rotary shaft of a spindle motor of the driving device is similar to that of Embodiment 1. That is, the turntable is inserted into the center hole 3 from the side of the cover layer 22b of the optical disk medium 30. In the course of the accessing of the turntable to the optical disk medium 30, a convex portion 123 of the turntable (See Fig. 1C) is engaged with the center hole 23, whereby the positional displacement of the center of the optical disk medium body 21 from the rotation center of the turntable can be corrected. When the cover layer 22b makes contact with an upper surface of a flange 122 (See Fig. 1C) that is formed at the edge of the turntable, the mounting operation is completed.

The operations of recording, reproduction and erasing with respect to the optical disk medium 30 of the present embodiment and the advantages over the conventional example are the same as those described in Embodiment 1, whose descriptions omitted.

Since the substrate 22 of the present embodiment is thicker than that of the substrate 2 of Embodiment 1, the concave portion 26 can be formed on the surface opposite to the light-incident surface instead of the convex portion 4. As a result, the confinement portion 28 can be provided within a range of the thickness of the substrate 22 in Embodiment 2, whereas the confinement portion 8 of Embodiment 1 is provided outside a range of the thickness of the substrate 2. Herein, the confinement portion being within a range of the thickness of the substrate refers to the state where a range occupied by the confinement portion in the height direction is included in a range occupied by the major regions of the substrate except the convex portion 4 and the concave portion 26 at the edge along the center hole, and the confinement portion being outside a range of the thickness of the substrate refers to the state where a range occupied by the confinement portion in the height direction does not overlap with a range occupied by the major regions of the substrate except the convex portion 4 and the concave portion 26 at the edge along the center hole. As compared with Embodiment 1 in which the convex portion 4 is formed on the surface of the substrate 2, the present embodiment whose concave portion 26 is formed in the substrate 22 facilitates the formation of the substrate 22 and can enhance the flatness of the substrate 22. Furthermore, the unevenness of the surfaces of the optical disk medium 30 can be reduced.

### (Embodiment 3)

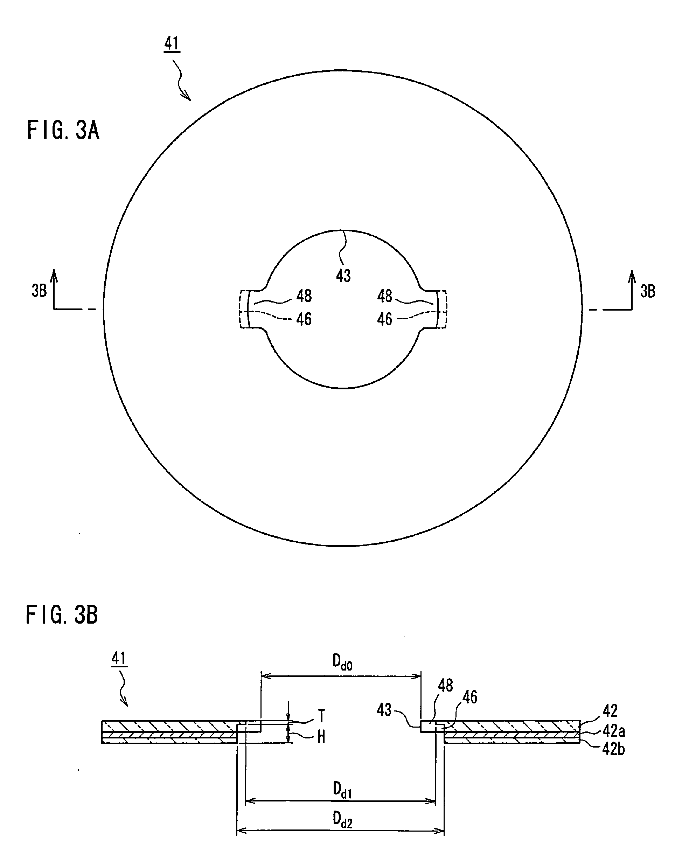

Fig. 3A is a plan view of an optical disk medium body of Embodiment 3 of the present invention, and Fig. 3B is a cross-sectional view taken along an arrow 3B-3B of Fig. 3A.

In Fig. 3A and Fig. 3B, reference numeral 41 denotes an optical disk medium body, 42 denotes a substantially disk-shaped substrate (a first layer), 42a denotes a recording layer provided on one side of the substrate 42, and 42b denotes a cover layer (a second layer) provided on a surface of the recording layer 42a. The cover layer 42b has a thickness smaller than that of the substrate 42, and is formed favorably for high-density recording. The recording layer 42a sandwiched between the substrate 42 and the cover layer 42b may be a phase change type, a magneto-optical recording type or other types of recording layers. In the recording layer 42a, a signal portion region is formed in which information is recorded. A laser beam (not illustrated) enabling the recording, the reproduction and the erasing of information is incident from a side of the cover layer 42b. That is, a light-incident surface is a surface of the cover layer 42b in Fig. 3B. Reference numeral 43 denotes a center hole for centering that is provided at the center of the substrate 42.

At two opposed parts of the edge along the center hole 43, cut-away portions 48 are provided. At edges of the respective cut-away portions 48, concave portions 46 are provided on a surface on the light-incident surface side. The depth of the concave portions 46 measured from a turntable fitting surface is defined as *H*. The thickness of the optical disk medium body 41 at the portion where the concave portion 46 is formed is defined as *T*. In the case of the present embodiment, the surface of the cover layer 42b corresponds to the turntable fitting surface.

Surfaces of the substrate 42, the recording layer 42a and the cover layer 42b that constitute the optical disk medium body 41 are substantially flat on the respective light-incident surface sides from the center hole 43 to the outermost periphery (except for the concave portions 46).

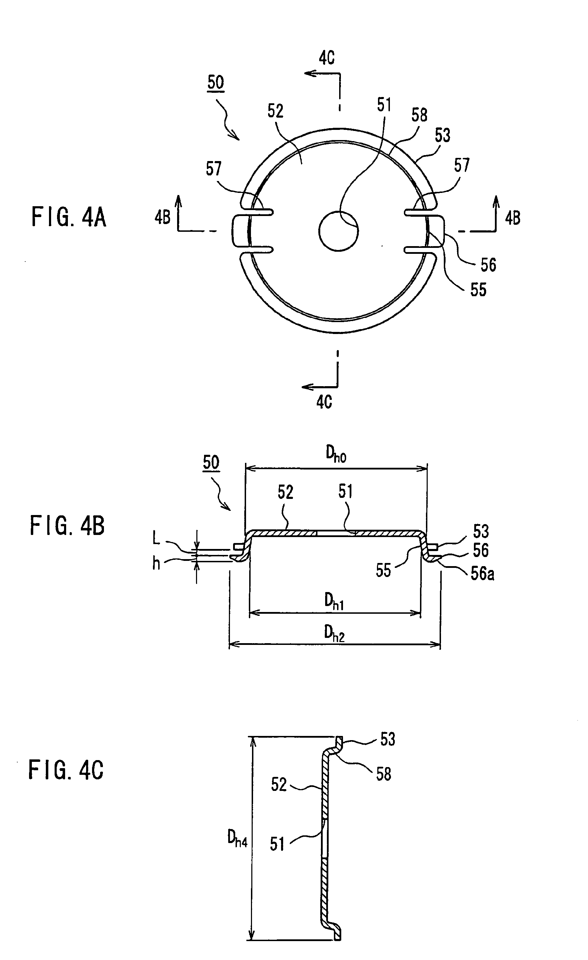

Fig. 4A is a plan view of a hub of Embodiment 3 of the present invention, Fig. 4B is a cross-sectional view taken along an arrow 4B-4B of Fig. 4A and Fig. 4C is a cross-sectional view taken along an arrow 4C-4C of Fig. 4A.

In Fig. 4A to Fig. 4C, reference numeral 50 denotes a hub, made of a magnetic material, having a disk form like a substantially hat shape, and a hub hole 51 is bored at the center of the hub to allow handling with a jig or the like. Reference numeral 52 denotes an attracted plane in a planar disk form that occupies most of the hub 50. Reference numeral 57 denotes four slits that are formed from the edge of the hub 50 to reach the attracted plane 52. The edge of the hub 50 is divided into two pairs of mutually opposed regions by the four slits 57.

In one of the two pairs of regions, a pair of flanges 53 is formed as a plurality of first latching strips. As shown in Fig. 4C, walls 58 are provided to extend in a direction substantially perpendicular to the attracted plane 52, and the flanges 53 are provided to extend in a direction substantially perpendicular to the walls 58. As a result, the pair of flanges 53 extends outwardly substantially in parallel with the attracted plane 52 and at a position different from the attracted plane 52 in the height direction.

In the other pair of regions, a pair of hook portions 56 is formed as a plurality of second latching strips. As shown in Fig. 4B, two leg portions 55 are provided to extend in a direction substantially perpendicular to the attracted plane 52, and the hook portions 56 are provided at the respective tip ends of the leg portions 55 so as to extend in a direction substantially perpendicular to the leg portions 55. As a result, the pair of hook portions 56 extends outwardly substantially in parallel with the attracted plane 52 and at a position different from the attracted plane 52 in the height direction. The thickness of the hook portions 56 is defined as *h*. The distance between the flange 53 and the hook portion 56 in a direction of the normal of the attracted plane 52 is defined as *L*.

The thickness *h* of the hook portions 56 is smaller than the depth *H* of the concave portions 46. In other words, they satisfy the relationship of *H* > *h*.

Furthermore, the surface of each of the hook portions 56 on the distant side from the attracted plane 52 (the lower surface of the hook portion 56 in Fig. 4B) is provided with a slanting surface 56a that slants to be closer to the attracted plane 52 side (the upper side in Fig. 4B) with increasing proximity to the tip end.

As shown in Fig. 4B, the attracted plane 52, the flange 53 and the hook portion 56 are disposed in this order from the top in the height direction. Thus, the length of the leg portion 55 is longer than the length of the wall 58 in the height direction. Moreover, the distance along the edge of the hub 50 between the pair of slits 57 that sandwich the leg portion 55 is smaller than the distance along the edge of the hub 50 between the pair of slits 57 that sandwich the flange 53. As a result, the leg portions 55 can be bent and deformed elastically with respect to the attracted plane 52, and the hook portions 56 can be displaced elastically in a direction substantially parallel with the attracted plane 52. On the contrary, the walls 58 hardly can be deformed, and the flanges 53 are formed rigidly with the attracted plane 52.

In this way, the hub 50 is provided with the flanges 53 as the first latching strips having high stiffness and with the hook portions 56 as the second latching strips that can be displaced elastically, and the flanges 53 and the hook portions 56 are separated from each other in the height direction (the direction of the normal of the attracted plane 52) so as to form a double-layered latching strip group.

The diameter *D*_{*h0*} of the circumscribed circle for the pair of leg portions 55 is smaller than the diameter *D*_{*d1*} of the inscribed circle for the edges of the pair of cut-away portions 48 of the substrate 42. The diameter *D*_{*h2*} of the circumscribed circle for the tip ends of the pair of hook portions 56 is smaller than the diameter *D*_{*d2*} of the inscribed circle for the pair of concave portions 46 and is larger than the diameter *D*_{*d1*} of the inscribed circle for the edges of the pair of cut-away portions 48. Furthermore, the diameter *D*_{*h1*} of the inscribed circle for the pair of leg portions 55 is larger than the diameter *D*_{*d0*} of the inscribed circle for the center hole 43. Furthermore, the diameter *D*_{*h4*} of the circumscribed circle for the tip ends of the pair of flanges 53 also is larger than the diameter *D*_{*d0*} of the inscribed circle for the center hole 43. Moreover, the distance *L* between the flange 53 and the hook portion 56 is larger than the thickness *T* of the optical disk medium body 41 at the portion in which the concave portion 46 is formed.

In the case where the driving device is equipped with a mechanical mounting mechanism, the optical disk medium body 41 can be mounted on the turntable without the use of the hub 50.

That is to say, the center hole 43 enables the centering with respect to the turntable and the mechanism inside the driving device allows the optical disk medium body 41 to be mounted on the turntable. As the mounting mechanism, a known mounting means for CDs is available, for example. The cut-away portions 48 and the concave portions 46 do not form any obstacles to this mounting operation.

On the other hand, when the hub 50 is attached to the optical disk medium body 41 so as to cover the center hole 43, the optical disk medium body 41 can be mounted on the turntable that utilizes a magnetic attractive force.

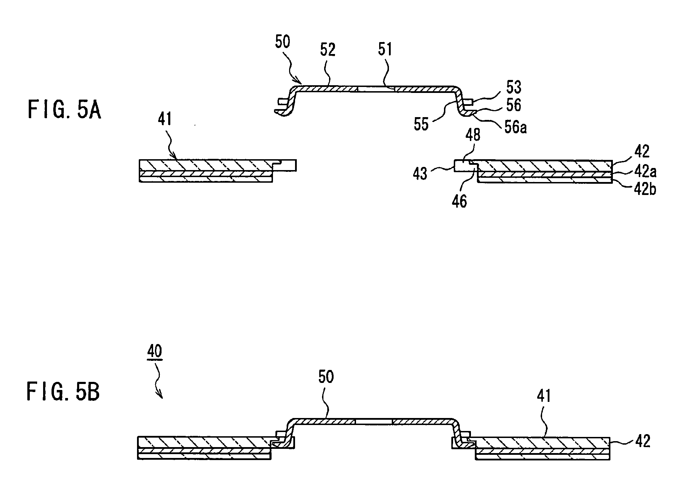

As shown in Fig. 5A, when the hub 50 is inserted to the optical disk medium body 41 from above, the slanting surfaces 56a at the lower surfaces of the pair of hook portions 56 make contact with the edges of the pair of cut-away portions 48 and the pair of leg portions 55 is elastically deformed inwardly, respectively, so that the pair of hook portions 56 passes between the pair of cut-away portions 48. Thereafter, the pair of leg portions 55 is restored elastically so that the pair of hook portions 56 is fitted into the pair of concave portions 46. At this time, the flanges 53 make contact with the upper surface of the substrate 42. As a result, the hub 50 is attached to the optical disk medium body 41 as shown in Fig. 5B, thus obtaining the optical disk medium 40.

The diameter *D*_{*h2*} of the circumscribed circle for the tip ends of the pair of hook portions 56 is larger than the diameter *D*_{*d1*} of the inscribed circle for the edges of the pair of cut-away portions 48, and the diameter *D*_{*h4*} of the circumscribed circle for the tip ends of the pair of flanges 53 is larger than the diameter *D*_{*d0*} of the inscribed circle for the center hole 43, and therefore the pair of hook portions 56 and the pair of flanges 53 catch the substrate 42. Thus, the hub 50 does not fall from the substrate 42.

Furthermore, the distance *L* between the flange 53 and the hook portion 56 is larger than the thickness *T* of the optical disk medium body 41 at the portion in which the concave portion 46 is formed. In addition, the diameter *D*_{*h0*} of the circumscribed circle for the pair of leg portions 55 is smaller than the diameter *D*_{*d1*} of the inscribed circle for the edges of the pair of cut-away portions 48. Moreover, the diameter *D*_{*h2*} of the circumscribed circle for the tip ends of the pair of hook portions 56 is smaller than the diameter *D*_{*d2*} of the inscribed circle for the pair of concave portions 46. From these, the hub 50 is movable within a limited range in the horizontal direction and in the height direction with respect to the substrate 42.

Furthermore, since the depth *H* of the concave portions 46 and the thickness *h* of the hook portions 56 satisfy the relationship of *H*> *h*, at least when the optical disk medium 40 is mounted on the turntable, the hook portions 56 are recessed in the concave portions 46. Therefore, the light-incident side surface of the optical disk medium body 41 and the upper surface of the flange 122 (See Fig. 1C) of the turntable can be in contact with each other entirely, and the hook portions 56 do not become a hindrance to the mounting operation.

Furthermore, the diameter *D*_{*h1*} of the inscribed circle for the pair of leg portions 55 is larger than the diameter *D*_{*d0*} of the inscribed circle for the center hole 43, and therefore the convex portion 123 having a cylindrical surface protruding from the center of the turntable and the tapered portion 124 at the top of the convex portion 123 (See Fig. 1C) make contact with the edge along the center hole 43 and not with the inner walls of the leg portions 55. Therefore, the leg portions 55 do not become a hindrance to the centering operation of the optical disk medium body 41.

The present embodiment further has the following specific effects in addition to the advantages of Embodiments 1 and 2. That is, the optical disk medium body 41 can be sold without the hub 50 being attached thereto. In this case, the cost of the hub 50 and the assembly cost of the optical disk medium body 41 can be reduced. Therefore, the optical disk medium body 41 can be provided at a low cost, which facilitates, for example, the distribution of the optical disk medium body 41 that is attached to a publication and the like. In this case, the configuration without a protrusion formed by the hub 50 also acts as a big advantage.

In the case where a driving device equipped with a mechanical mounting mechanism is used, the optical disk medium body 41 alone can be mounted without the use of the hub 50 as stated above and can be used. Alternatively, a user who uses a driving device equipped with a mounting mechanism utilizing a magnetic attractive force may get a hub 50 if needed and attach the hub 50 to the optical disk medium body 41 by himself/herself so as to use the same.

Needless to say, a manufacturer can sell the optical disk medium 40 shown in Fig. 5B in which the hub 50 has been attached to the optical disk medium body 41. In this case, the hub 50 can be attached to the optical disk medium body 41 without the necessity of specific capital investment, and therefore the manufacturing cost can be reduced.

The optical disk medium body 41 of the present embodiment is provided with the concave portion 46 on the light-incident surface side. Unlike the convex portion 104 shown in Fig. 12B, this concave portion 46 hardly becomes a hindrance to the formation of a thin cover layer 42b with a uniform thickness. In this way, substantially no protrusions are formed on the surface of the optical disk medium body 41 of the present embodiment on the light-incident surface side, which facilitates the formation of the cover layer 42b with excellent optical properties.

### (Embodiment 4)

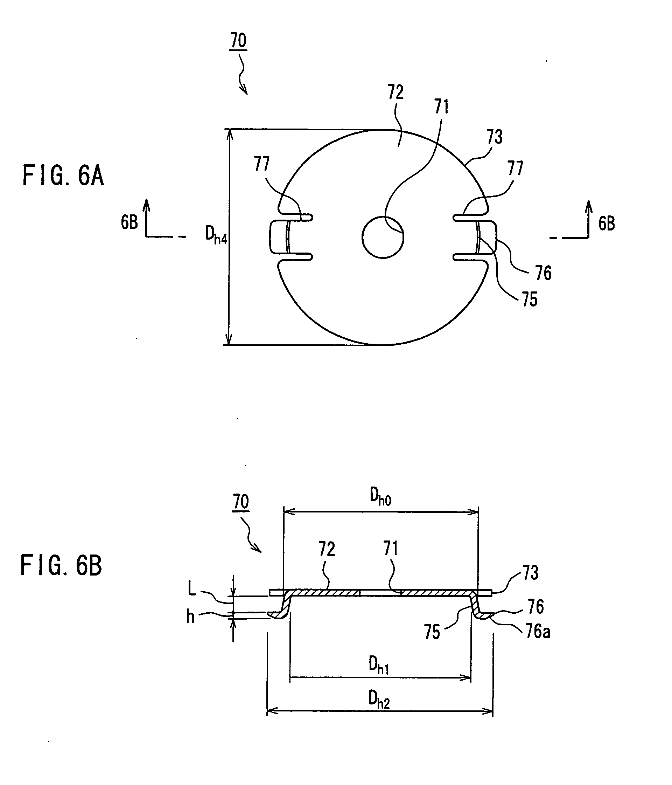

Fig. 6A is a plan view of a hub of Embodiment 4 of the present invention, and Fig. 6B is a cross-sectional view taken along an arrow 6B-6B of Fig. 6A.

In Fig. 6A and Fig. 6B, reference numeral 70 denotes a hub, made of a magnetic material, having a substantially disk form, and a hub hole 71 is bored at the center of the hub to allow handling with a jig or the like. Reference numeral 72 denotes an attracted plane in a planar disk form that occupies most of the hub 70. Reference numeral 77 denotes four slits that are formed from the edge of the hub 70. The edge of the hub 70 is divided into two pairs of mutually opposed regions by the four slits 77.

In one of the two pairs of regions, a pair of flanges 73 is formed substantially coplanar with the attracted plane 72 as a plurality of first latching strips. The following describes the case where the flanges 73 are provided coplanar with the attracted plane 72.

In the other pair of regions, a pair of hook portions 76 is formed as a plurality of second latching strips. As shown in Fig. 6B, two leg portions 75 are provided to extend in a direction substantially perpendicular to the attracted plane 72, and the hook portions 76 are provided at the respective tip ends of the leg portions 75 so as to extend in a direction substantially perpendicular to the leg portions 75. As a result, the pair of hook portions 76 extends outwardly substantially in parallel with the attracted plane 72 and at a position different from the attracted plane 72 and the flanges 73 in the height direction. The thickness of the hook portions 76 is defined as *h*. The distance between the flange73 and the hook portion 76 in a direction of the normal of the attracted plane 72 is defined as *L*.

Furthermore, the surface of each of the hook portions 76 on the distant side from the attracted plane 72 (the lower surface of the hook portions 76 in Fig. 6B) is provided with a slanting surface 76a that slants to be closer to the attracted plane 72 side (the upper side in Fig. 6B) with increasing proximity to the tip end.

As shown in Fig. 6B, the attracted plane 72 and the flanges 73 are located at the same height in the height direction, and the hook portion 76 is disposed below these. The distance along the edge of the hub 70 between the pair of slits 77 that sandwich the leg portion 75 is smaller than the distance along the edge of the hub 70 between the pair of slits 77 that sandwich the flange 73. As a result, the leg portions 75 can be bent and deformed elastically with respect to the attracted plane 72, and the hook portions 76 can be displaced elastically in a direction substantially parallel with the attracted plane 72. On the contrary, the flanges 73 are formed rigidly with the attracted plane 72.

In this way, the hub 70 is provided with the flanges 73 as the first latching strips having high stiffness and with the hook portions 76 as the second latching strips that can be displaced elastically, and the flanges 73 and the hook portions 76 are separated from each other in the height direction (the direction of the normal of the attracted plane 72) so as to form a double-layered latching strip group.

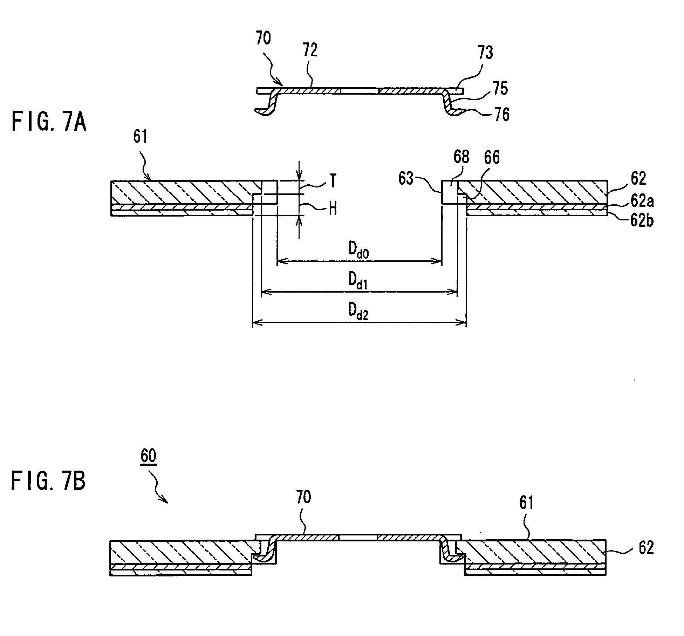

Fig. 7A is an exploded cross-sectional view of an optical disk medium body and the hub that constitute the optical disk medium of Embodiment 4 of the present invention, and Fig. 7B is a cross-sectional view of the optical disk medium of Embodiment 4 of the present invention.

In Fig. 7A and Fig. 7B, reference numeral 61 denotes an optical disk medium body and 62 denotes a substantially disk-shaped substrate (a first layer). The optical disk medium body 61 of the present embodiment is the same as the optical disk medium body 41 of Embodiment 3 as a whole except that the substrate 62 is thicker than the substrate 42. A recording layer 62a, a cover layer 62b and a center hole 63 are the same as the recording layer 42a, the cover layer 42b and the center hole 43 of Embodiment 3, respectively.

Similarly to Embodiment 3, at two opposed parts of the edge along the center hole 63, cut-away portions 68 are provided. At edges of the respective cut-away portions 68, concave portions 66 are provided on a surface on the light-incident surface side. The depth of the concave portion 66 measured from a turntable fitting surface is defined as *H*. The thickness of the optical disk medium body 61 at the portion where the concave portion 66 is formed is defined as *T*. In the case of the present embodiment, the surface of the cover layer 62b corresponds to the turntable fitting surface.

Similarly to Embodiment 3, the thickness *h* of the hook portions 76 of the hub 70 is smaller than the depth *H* of the concave portions 66. In other words, they satisfy the relationship of *H*> *h*.

Surfaces of the substrate 62, the recording layer 62a and the cover layer 62b that constitute the optical disk medium body 61 are substantially flat on the respective light-incident surface sides from the center hole 63 to the outermost periphery (except for the concave portions 66).

The diameter *D*_{*h0*} of the circumscribed circle for the pair of leg portions 75 is smaller than the diameter *D*_{*d1*} of the inscribed circle for the edges of the pair of cut-away portions 68 of the substrate 62. The diameter *D*_{*h2*} of the circumscribed circle for the tip ends of the pair of hook portions 76 is smaller than the diameter *D*_{*d2*} of the inscribed circle for the pair of concave portions 66 and is larger than the diameter *D*_{*d1*} of the inscribed circle for the edges of the pair of cut-away portions 68. Furthermore, the diameter *D*_{*h1*} of the inscribed circle for the pair of leg portions 75 is larger than the diameter *D*_{*d0*} of the inscribed circle for the center hole 63. Furthermore, the diameter *D*_{*h4*} of the circumscribed circle for the tip ends of the pair of flanges 73 also is larger than the diameter *D*_{*d0*} of the inscribed circle for the center hole 63. Moreover, the distance *L* between the flange 73 and the hook portion 76 is larger than the thickness *T* of the optical disk medium body 61 at the portion in which the concave portion 66 is formed.

In the case where the driving device is equipped with a mechanical mounting mechanism, the optical disk medium body 61 can be mounted on the turntable without the use of the hub 70.

That is to say, the center hole 63 enables the centering with respect to the turntable and the mechanism inside the driving device allows the optical disk medium body 61 to be mounted on the turntable. As the mounting mechanism, a known mounting means for CDs is available, for example. The cut-away portions 68 and the concave portions 66 do not form any obstacles to this mounting operation.

On the other hand, when the hub 70 is attached to the optical disk medium body 61 so as to cover the center hole 63, the optical disk medium body 61 can be mounted on the turntable that utilizes a magnetic attractive force.

Similarly to Embodiment 3, as shown in Fig. 7A, when the hub 70 is inserted to the optical disk medium body 61 from above, the slanting surfaces 76a at the lower surfaces of the pair of hook portions 76 make contact with the edges of the pair of cut-away portions 68 and the pair of leg portions 75 is elastically deformed inwardly, respectively, so that the pair of hook portions 76 passes between the pair of cut-away portions 68. Thereafter, the pair of leg portions 75 is restored elastically so that the pair of hook portions 76 is fitted into the concave portions 66. At this time, the flanges 73 make contact with the upper surface of the substrate 62. As a result, the hub 70 is attached to the optical disk medium body 61 as shown in Fig. 7B, thus obtaining the optical disk medium 60.

The diameter *D*_{*h2*} of the circumscribed circle for the tip ends of the pair of hook portions 76 is larger than the diameter *D*_{*d1*} of the inscribed circle for the edges of the pair of cut-away portions 68, and the diameter *D*_{*h4*} of the circumscribed circle for the tip ends of the pair of flanges 73 is larger than the diameter *D*_{*d0*} of the inscribed circle for the center hole 63, and therefore the pair of hook portions 76 and the pair of flanges 73 catch the substrate 62. Thus, the hub 70 does not fall from the substrate 62.

Furthermore, the distance *L* between the flange 73 and the hook portion 76 is larger than the thickness *T* of the optical disk medium body 61 at the portion in which the concave portion 66 is formed. In addition, the diameter *D*_{*h0*} of the circumscribed circle for the pair of leg portions 75 is smaller than the diameter *D*_{*d1*} of the inscribed circle for the edges of the pair of cut-away portions 68. Moreover, the diameter *D*_{*h2*} of the circumscribed circle for the tip ends of the pair of hook portions 76 is smaller than the diameter *D*_{*d2*} of the inscribed circle for the pair of concave portions 66. From these, the hub 70 is movable within a limited range in the horizontal direction and in the height direction with respect to the substrate 62.

Furthermore, since the depth *H* of the concave portions 66 and the thickness *h* of the hook portions 76 satisfy the relationship of *H*> *h*, at least when the optical disk medium 60 is mounted on the turntable, the hook portions 76 are recessed in the concave portions 66. Therefore, the light-incident side surface of the optical disk medium body 61 and the upper surface of the flange 122 (See Fig. 1C) of the turntable can be in contact with each other entirely, and the hook portions 76 do not become a hindrance to the mounting operation.

Furthermore, the diameter *D*_{*h1*} of the inscribed circle for the pair of leg portions 75 is larger than the diameter *D*_{*d0*} of the inscribed circle for the center hole 63, and therefore the convex portion 123 having a cylindrical surface protruding from the center of the turntable and the tapered portion 124 at the top of the convex portion 123 (See Fig. 1C) make contact with the edge along the center hole 63 and not with the inner walls of the leg portions 75. Therefore, the leg portions 75 do not become a hindrance to the centering operation of the optical disk medium body 61.

In addition to the advantages of the availability of the optical disk medium body 61 alone and the capability of the attachment of the hub 70 as needed, which are similar to advantages of Embodiment 3, the present embodiment has another advantage of the enhancement of the accuracy of form because the flanges 73 of the hub 70 are formed substantially coplanar with the attracted plane 72.

### (Embodiment 5)

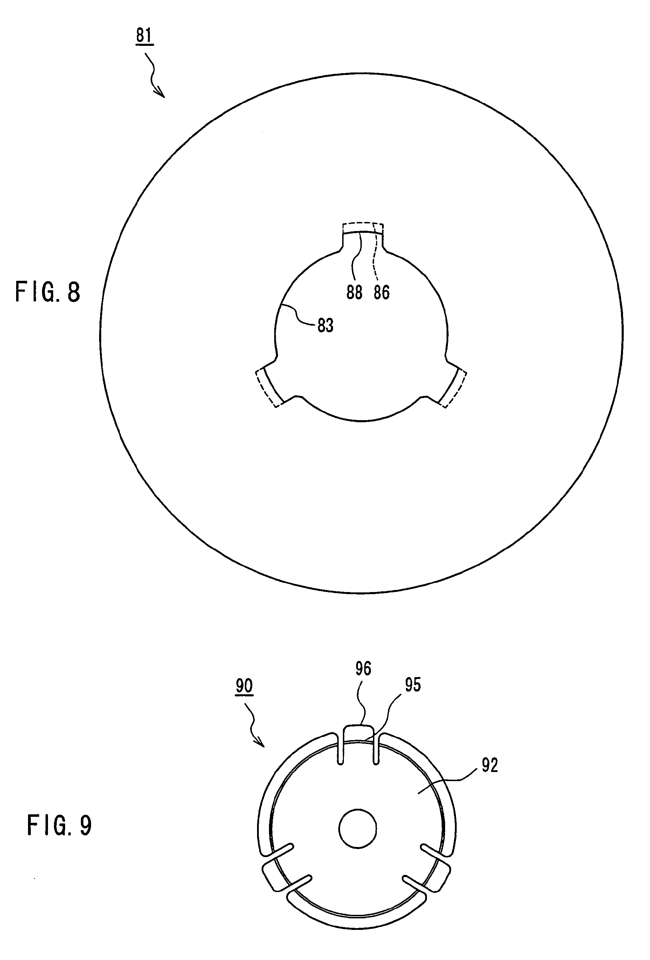

Fig. 8 is a plan view of an optical disk medium body 81 of Embodiment 5 of the present invention. The optical disk medium body 81 of the present embodiment is different from the optical disk medium body 41 of Embodiment 3 in that cut-away portions 88 and concave portions 86 are provided at three points spaced at substantially equal angles at the edge along a center hole 83, whereas the cut-away portions 48 and the concave portions 46 of the optical disk medium body 41 of Embodiment 3 are provided at two mutually opposed points of the edge along the center hole 43. The cut-away portions 88 and the concave portions 86 are substantially the same as the cut-away portions 48 and the concave portions 46, respectively. The remaining configuration of the optical disk medium body 81 of the present embodiment is approximately the same as that of the optical disk medium body 41 of Embodiment 3.

Fig. 9 is a plan view of a hub 90 of Embodiment 5 of the present invention. The hub 90 of the present embodiment is different from the hub 50 of Embodiment 3 in that leg portions 95 and hook portions 96 are provided at three points spaced at substantially equal angles at the edge of an attracted plane 92 so as to be adapted to the optical disk medium body 81, whereas the leg portions 55 and the hook portions 56 are provided at two mutually opposed points at the edge of the attracted plane 52 of the hub 50 of Embodiment 3. The leg potions 95 and the hook portions 96 are substantially the same as the leg portions 55 and the hook portions 56, respectively. The remaining configuration of the hub 90 of the present embodiment is approximately the same as that of the hub 50 of Embodiment 3.

The details of the present embodiment have been omitted, because they are substantially the same as those described in Embodiment 3. The specific effect of the present embodiment in contrast with Embodiment 3 resides in that the hub 90 is connected with the optical disk medium body 81 more stably because the optical disk medium body 81 and the hub 90 are engaged at three points. This leads to the effect of significantly reducing the possibility of the hub 90 falling out when subjected to an impact due to dropping, for example.

In the present invention, the connecting configuration of the optical disk medium body with the hub and the number of engagement portions made up of the cut-away portions and the concave portions provided in the optical disk medium body and the leg portions and the hook portions provided in the hub are not limited to those described in the above Embodiments 3 to 5, and they can be changed variously within a scope of the present invention.

### (Embodiment 6)

The following describes a preferable numerical range concerning a portion where the hub is attached to the optical disk medium body.

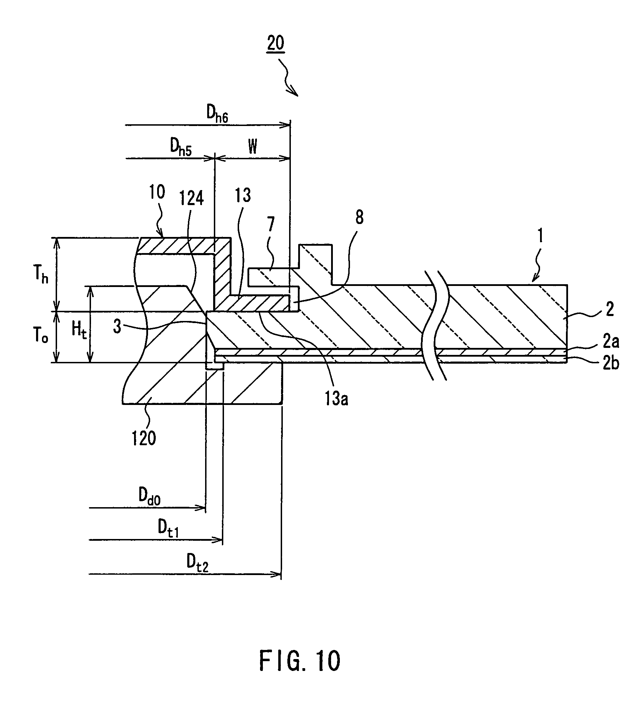

Fig. 10 is an expanded cross-sectional view of a portion in the vicinity of a center hole of an optical disk medium of Embodiment 6 of the present invention. The optical disk medium of Fig. 10 has the same configuration as that of the optical disk medium 20 (See Fig. 1B) described in Embodiment 1, and therefore the same reference numerals are assigned to the same elements as those in Embodiment 1 and their detailed explanations omitted.

Experiments were conducted in order to determine the preferable numerical range of various dimensions of the portions in the vicinity of the center hole 3. The details of the experiments are as follows:

The substrate 2 was made of polycarbonate, whose outer diameter was 54 mm and thickness was 0.6 mm. A material of the hub 10 was stainless steel having magnetic properties.

The attachment of the hub 10 to the optical disk medium body 1 was as described in Embodiment 1. That is to say, as shown in Fig. 1A, the hub 10 was inserted inside the ring-shaped convex portion 4 surrounding the center hole 3, and the internal portion of the upper surface of the convex portion 4 was melted by an ultrasonic welding method and was deformed by a pressure applied thereto, whereby the protrusion 7 covering the flange 13 of the hub 10 was formed. In this step, the melting amount was controlled so as to ensure a gap between the confinement portion 8 whose cross-section would be shaped a substantially "⊃" shape and the flange 13, which allowed the hub 10 to move freely with respect to the optical disk medium body 1 within a limited range.

In the case where the hub 10 and the substrate 2 are adhered completely, there is a probability that the optical disk medium body 1 is mounted on the turntable 120 in an off-center state when the optical disk medium 20 is mounted on the turntable 120 of the driving device. If the hub 10 is movable with respect to the optical disk medium body 1, the tapered portion 124 of the turntable 120 easily exerts the centering function for the center hole 3.

Firstly, a position of a region 13a where the lower surface of the flange 13 and the upper surface of the substrate 2 contacted was changed from the rotation center axis, and a change in the warped angle at the outer edge of the optical disk medium body 1 mounted on the turntable 120 was measured.

In Experiment 1, the inner diameter *D*_{*d0*} of the center hole 3 was set at 11 mm. The thickness *T*_{*0*} of the optical disk medium body 1 at the region 13a was set at 0.6 mm. Furthermore, as for the ring-shaped portion of the turntable 120 that contacted with the lower surface of the optical disk medium body 1, the inner diameter *D*_{*t1*} and the outer diameter *D*_{*t2*} of that portion were set at 12 mm and 13 mm, respectively. The width *W* of the region 13a in the radius direction was kept constant at 1.0 mm and the inner diameter *D*_{*h5*} and the outer diameter *D*_{*h6*} of the region 13a were changed. Table 1 shows the results. In Table 1, the warp is represented in a manner that positive (+) indicates the upward warp in Fig. 10 and negative (-) indicates the downward warp (toward the light-incident surface).

**[Table 1]**

| Inner diameter Dₕ₅ (mm) | Outer diameter Dₕ₆ (mm) | Warp (degree) |
|---|---|---|
| 11.0 | 12.0 | +0.15 |
| 11.5 | 12.5 | +0.10 |
| 11.8 | 12.8 | +0.02 |
| 12.0 | 13.0 | +0.02 |
| 12.3 | 13.3 | +0.02 |
| 12.5 | 13.5 | -0.03 |

From Table 1, it was found that the warp of the optical disk medium body 1 was changed in accordance with a change in the position of the region 13a where the lower surface of the flange 13 and the upper surface of the substrate 2 contacted.

In Experiment 2, the warp was measured in a manner similar to the above Experiment 1 except that the inner diameter *D*_{*t1*} and the outer diameter *D*_{*t2*} of the ring-shaped portion of the turntable 120 that contacted with the lower surface of the optical disk medium body 1 were changed to 12.5 mm and 13.5 mm, respectively, and the width *W* of the region 13a in the radius direction was kept constant at 1.2 mm. Table 2 shows the results.

**[Table 2]**

| Inner diameter Dₕ₅ (mm) | Outer diameter Dₕ₆ (mm) | Warp (degree) |
|---|---|---|
| 11.0 | 12.2 | +0.10 |
| 11.5 | 12.7 | +0.04 |
| 11.8 | 13.0 | +0.01 |
| 12.0 | 13.2 | +0.02 |
| 12.3 | 13.5 | -0.02 |
| 12.5 | 13.7 | -0.05 |

From Table 1 and Table 2, it was found that the warp of the optical disk medium body 1 was changed also with the dimensions of the turntable 120.

Then, in view of Table 1, as for the region 13a, the inner diameter *D*_{*h5*} ≥ 11.8 mm and the outer diameter *D*_{*h6*} ≤ 13.3 mm are preferable, and in view of Table 2, as for the region 13a, the inner diameter *D*_{*h5*} ≥ 11.8 mm and the outer diameter *D*_{*h6*} ≤ 13.5 mm are preferable. Therefore, in the case of the inner diameter of the region 13a *D*_{*h5*} ≥ 11.8 mm and the outer diameter *D*_{*h6*} ≤ 13.3 mm, the warp of the optical disk medium body 1 can be reduced for both of the conditions in the above Experiment 1 and Experiment 2. The inner diameter *D*_{*h5*} ≥ 11.8 mm and the outer diameter *D*_{*h6*} ≤ 13.0 mm are the most preferable.

As long as the inner diameter *D*_{*h5*} and the outer diameter *D*_{*h6*} satisfy the above-stated numerical range, there is no need to set the width *W* of the region 13a in the radius direction at 1.0 mm and 1.2 mm as in the above Experiments 1 and 2. The width may be set larger or smaller than these values or a value between these.

Secondly, the thickness *T*_{*0*} of the optical disk medium body 1 at the region 13a was changed, and a change in the warped angle at the outer edge of the optical disk medium body 1 mounted on the turntable 120 was measured.

In general, the optical disk medium 20 is required to have a smaller thickness. Herein, the thickness of the optical disk medium 20 is substantially determined by a sum of the thickness *T*_{*0*} of the optical disk medium body 1 at the region 13a and the thickness *Th* of the hub 10. There is a lower limit for the thickness *Th* of the hub 10 in terms of the processability and the strength to be secured. Also from the viewpoint of avoiding the collision with the turntable 120 that is inserted into the center hole 3, there is a lower limit for the thickness *Th* of the hub 10. Hence, the thickness *T*_{*0*} of the region 13a is required to be smaller.

In Experiment 3, the warped angle at the outer edge of the optical disk medium body 1 was measured, while the thickness *T*_{*0*} was changed. In the conditions of the above-described Experiment 1, the inner diameter *D*_{*h5*} and the outer diameter *D*_{*h6*} were set at 12.0 mm and 13.0 mm, respectively. The thickness *Th* of the hub 10 was set at 0.9 mm. The height *Ht* of the turntable 120 at a portion inserted into the center hole 3 was set at 1.2 mm. Table 3 shows the results.

**[Table 3]**

| Thickness T₀ (mm) | Warp (degree) |
|---|---|
| 0.3 | +0.10 |
| 0.4 | +0.04 |
| 0.5 | +0.02 |
| 0.6 | +0.02 |
| 0.7 | +0.02 |
| 0.8 | +0.02 |

From Table 3, when the thickness *T*_{*0*} is less than 0.5 mm, the warp of the optical disk medium body 1 increases, and the thickness of 0.3 mm leads to a significant increase in the warp. Therefore, the thickness *T*_{*0*} of the optical disk medium body 1 at the region 13a should be 0.5 mm or more.

Note here that, in this Embodiment 6, explanations have been made taking the optical disk medium described in Embodiment 1 as an example. However, the present embodiment can be applied similarly to the optical disk media of Embodiments 2 to 5 as well. Conceivably, the above-stated warp of the optical disk media occurred because the optical disk medium body was positioned between the hub and the turntable. Therefore, in the case of the applications to the optical disk media of Embodiments 3 to 5, the flange 13 of the above-stated hub 10 needs to be adapted to the first latching strips. Thus, in the case of Embodiment 3, for example, it is preferable that the diameter of the circle that is inscribed in the two region where the surface of the optical disk medium body 41 on the opposite side of the light-incident surface and the flanges 53 of the hub 50 is 11. 8 mm or more and the diameter of the circle that is circumscribed around the two regions is 13.3 mm or less. Furthermore, the thickness of the optical disk medium body 41 at the portion contacting with the flanges 53 preferably is 0.5 mm or more.

In the above-described optical disk medium bodies of Embodiments 1 to 6, the recording layers and the cover layers are formed so as to reach the edge along the center holes. However, the present invention is not limited to these. At a region closer to the center hole that contacts with the turntable, with respect to which the recording/reproduction of information is impossible practically, the recording layer and/or the cover layer may not be formed. Furthermore, the recording layer and/or the cover layer may not be formed in the vicinity of the outer edge of the substrate as well. Since the thicknesses of the recording layer and the cover layer are so small that a level difference generated at a border line on the substrate is small between the region where these layers are formed and a not-forming region. In the present invention, although a substantially flat surface of the optical disk medium body on the light-incident surface side is preferable, "substantially flat" in this context contemplates the presence of such a level difference.

The embodiments disclosed in this application are intended to illustrate the technical aspects of the invention and not to limit the invention thereto. The invention may be embodied in other forms without departing from the spirit and the scope of the invention as indicated by the appended claims and is to be broadly construed.

## Claims

1. An optical disk medium, comprising:
an optical disk medium body including a first layer, a second layer thinner than the first layer, and a recording layer between the first layer and the second layer and including a center hole at a center thereof; and
a hub made of a magnetic material,
wherein the hub is confined with the optical disk medium body in such a manner that the hub is movable with respect to the optical disk medium body within a predetermined range and that the hub covers the center hole,
a surface of the optical disk medium body on a side of the second layer is a light-incident surface, and
there is substantially no protrusion formed on the surface of the optical disk medium body on the light-incident surface side that includes an edge along the center hole.

2. The optical disk medium according to claim 1, wherein a surface for fitting to a turntable of a driving device is the light-incident surface.

3. The optical disk medium according to claim 1, wherein a confinement portion for confining the hub is provided in the first layer.

4. The optical disk medium according to claim 3, wherein the confinement portion is provided outside a range of a thickness of the first layer.

5. The optical disk medium according to claim 3, wherein the confinement portion is provided within a range of a thickness of the first layer.

6. The optical disk medium according to claim 1,
wherein the hub includes an attracted plane on which a magnetic attractive force acts and a flange formed substantially in parallel with the attracted plane and along an edge of the attracted plane,
at the flange, the hub is confined with the optical disk medium body, and
a substantially ring-shaped contacting region at which the flange and the optical disk medium body contact has an inner diameter of 11.8 mm or more and an outer diameter of 13.3 mm or less.

7. The optical disk medium according to claim 1,
wherein the hub includes an attracted plane on which a magnetic attractive force acts and a flange formed substantially in parallel with the attracted plane and along an edge of the attracted plane,
at the flange, the hub is confined with the optical disk medium body, and
a region of the optical disk medium body that contacts with the flange has a thickness of 0.5 mm or more.

8. A hub that is attached to an optical disk medium body so as to cover a center hole formed at a center of the optical disk medium body and for mounting the optical disk medium body on a turntable by utilizing a magnetic attractive force, the hub being made of a magnetic material and comprising:
an attracted plane on which the magnetic attractive force acts; and
a plurality of first latching strips and a plurality of second latching strips, the first latching strips and the second latching strips being located at positions different from each other in a direction of the normal of the attracted plane.

9. The hub according to claim 8, wherein the hub is attached to the optical disk medium body in such a manner that at least a part of the optical disk medium body at an edge along the center hole is positioned between the plurality of first latching strips and the plurality of second latching strips.

10. The hub according to claim 8, wherein the hub is attached to the optical disk medium body in such a manner that the hub is movable with respect to the optical disk medium body within a predetermined range.

11. The hub according to claim 8,
wherein the plurality of first latching strips are formed rigidly with the attracted plane, and
the plurality of second latching strips can be displaced elastically with respect to the attracted plane.

12. The hub according to claim 8,
wherein when the hub is attached to the optical disk medium body, the plurality of second latching strips make contact with an edge along the center hole so as to be displaced elastically with respect to the attracted plane and thereafter are restored elastically, thereby the hub is attached to the optical disk medium body in such a manner that at least a part of the edge along the center hole is positioned between the plurality of first latching strips and the plurality of second latching strips.

13. The hub according to claim 8, further comprising a plurality of leg portions that extend in a direction substantially perpendicular to the attracted plane,
wherein the plurality of second latching strips respectively are provided at tip ends of the plurality of leg portions and protrude outwardly substantially in parallel with the attracted plane, and
the plurality of first latching strips protrude outwardly substantially in parallel with the attracted plane.

14. The hub according to claim 13, wherein a diameter of a circle that is inscribed in the plurality of leg portions is larger than a diameter of a circle that is inscribed in the center hole.

15. The hub according to claim 8, further comprising a plurality of walls that extend substantially perpendicular to the attracted plane,
wherein the plurality of first latching strips respectively are provided at tip ends of the plurality of walls and protrude outwardly substantially in parallel with the attracted plane, and
the hub has a substantially hat shaped disk form as a whole.

16. The hub according to claim 8, wherein the plurality of first latching strips and the attracted plane are substantially coplanar with each other.

17. An optical disk medium, comprising:
an optical disk medium body including a first layer, a second layer thinner than the first layer, and a recording layer between the first layer and the second layer and including a center hole at a center thereof; and
a hub attached so as to cover the center hole,
wherein a surface of the optical disk medium body on a side of the second layer is a light-incident surface, and
the hub is the hub according to claim 8.

18. The optical disk medium according to claim 17, wherein in a state where the optical disk medium is mounted on a turntable of a driving device, the second latching strips, which are the nearest to the turntable, do not protrude from the surface of the optical disk medium body on a side of the light-incident surface, and the surface of the optical disk medium body on the side of the light-incident surface contacts with a surface of the turntable.

19. The optical disk medium according to claim 17, wherein the hub is confined with the optical disk medium body in such a manner that the hub is movable with respect to the optical disk medium body within a predetermined range.

20. The optical disk medium according to claim 17,
wherein the hub further includes a plurality of leg portions that extend in a direction substantially perpendicular to the attracted plane,
the plurality of second latching strips respectively are provided at tip ends of the plurality of leg portions and protrude outwardly substantially in parallel with the attracted plane,
a plurality of cut-away portions are formed at a part of an edge along the center hole, the cut-away portions extending outwardly, and
a diameter of a circle that is inscribed in edges of the plurality of cut-away portions is larger than a diameter of a circle that is circumscribed around the plurality of leg portions.

21. The optical disk medium according to claim 20,
wherein a concave portion in which each of the plurality of second latching strips is to be fitted is formed at an edge of each of the plurality of cut-away portions on the light-incident surface side, and
assuming that a depth of the concave portion in a direction of the normal of the light-incident surface is *H* and a thickness of the plurality of second latching strips in the direction of the normal is *h*, a relationship of *H* > *h* is satisfied.

22. The optical disk medium according to claim 17, wherein there is substantially no protrusion formed on the surface on the light-incident surface side that includes an edge along the center hole.

23. The optical disk medium according to claim 17, wherein a diameter of a circle that is inscribed in a plurality of regions where the plurality of first latching strips and the optical disk medium body contact is 11.8 mm or more, and a diameter of a circle that is circumscribed around the plurality of regions is 13.3 mm or less.

24. The optical disk medium according to claim 17, wherein a thickness of the optical disk medium body at a region where the optical disk medium body contacts with the first latching strips is 0.5 mm or more.
